# EUROPEAN PATENT SPECIFICATION

(11) **EP 2 642 041 B1**
(45) Date of publication and mention of the grant of the patent: **30.09.2015**
(21) Application number: 12161055.4
(22) Date of filing: 23.03.2012
(51) Int. Cl.: C04B 38/08, C04B 28/04, E04B 1/76, C04B 111/00, C04B 111/28, E04C 2/06, E04C 2/04

(54) **Structural concrete wall with thermal insulation and manufacturing process**
Betontragwand mit Wärmedämmung und Herstellungsverfahren
Mur en béton structural à isolation thermique et procédé de fabrication

(43) Date of publication of application: 25.09.2013
(73) Proprietor: Cemex Research Group AG, 2555 Brügg bei Biel (CH)
(72) Inventor: Zampini, Davide, 3250 Lyss (CH); Guerini, Alexandre, 2088 Cressier (CH)
(74) Representative: Carvajal y Urquijo, Isabel

(56) References cited:
- CH-A- 426 174
- DE-A1- 2 821 490
- DE-U1- 9 005 780
- DE-U1- 9 420 789
- DE-U1- 20 303 762

## Description

### TECHNICAL FIELD

The invention relates to a system of sandwich wall structure for houses, buildings or any other constructions. The technique is based on the use of construction material poured in formwork or molds directly on the construction site, in order to confer structural as well as thermal insulation properties to said wall. The construction material is concrete - in the wide sense - using a matrix containing cement or cementitious material mixtures, water, additives as well as light weight aggregates of various size shapes and nature.

### BACKGROUND

Concrete walls are normally thermally insulated using an additional material (either on the internal side or on the external side) since conventional concrete does not have good insulation properties.

Many techniques exists associating insulating materials and structural in the manufacture of walls. In general, these techniques use of combinations of materials extremely different in layers, chosen for their performance function. In the example of concrete walls, the structural part is ensured by the concrete and the part thermal insulation by insulators of type polystyrene, polyurethane, rock or glass wool, that are placed on one or both surfaces of the wall. The insulation material are either glued or fixed onto the walls.

These techniques request a succession of operations and leave obviously at least one of the sides of the wall without mechanical protection, requiring the establishment of additional layers (mortars, plaster or rigid panels for instance) to obtain an acceptable surface finish and surface resistance.

Many techniques also exist in the pre-cast or pre-fabricated industry to provide sandwich panels with structural and thermal properties for the construction. However, compared to the advantages related to jobsite casting, pre-cast present many obvious main disadvantages , like for instance the high costs and high environmental impact related to transportation, the lack of flexibility in shapes, problems related to joining etc.

The system described by EP0322923 presents a sandwich structure which can be used for vertical applications carried out on site. The document EP0322923 describes the use of an intermediate layer dedicated to thermal insulation, made out of extruded polystyrene, and surrounded by two layers of concrete. This system provides a wall with thermal properties and structural properties and is characterized by conventional concrete rigid interior and exterior surfaces.

In the system described by EP0322923, the two layers of concrete must be poured simultaneously, with approximately the same speed to avoid breakage of the intermediate insulation layer. A sophisticated system of anchoring in the layer of insulation in the two adjacent layers of concrete is described in the patent. Having an intermediate thermal insulation layer yields technical difficulties and constrains and significantly complicates the construction of the wall.

Monolithic concrete wall systems ensuring with one layer both the thermal and structural function also exist, like in WO 2009/083809. These walls have thermal conductivity values between 0.5 and 0.6 W/m*k and densities above 1.4 ton/m3. Due the relatively high values of the thermal conductivity, monolithic structures require very important thicknesses to achieve acceptable thermal insulation values for the wall.

To reach a value of 0.5 W/m2K the system described in WO 2009/083809, the wall would need to have a thickness of 1.2 m with a thermal conductivity of 0.55 W/m*k. It can clearly be seen that such a system is not suitable for structural isolated walls for which thickness is located between 0.25 and 0.7 m.

A similar wall is also described in WO 01/00921 A1.

### DESCRIPTION

The invention refers to a structural and thermal insulated concrete wall, where mechanical resistances as well as thermal properties are obtained using concrete based cast able construction materials of cementitious nature containing only mineral aggregates or air, with no requirements for additional organic based material in the form of aggregates or continuous layers.

The below described construction system is made up of at least two different concrete layers including at least one lightweight self-placing concrete layer, having different mechanical and thermal conductivity properties from a second concrete layer, without recourse to an additional thermal insulator, to obtain an insulation value of the wall located between 0.2 to 0.5 W/m2K.

The invention structural concrete wall with thermal insulation comprising:
- A first concrete layer of thickness between 80mm to 200mm depending on the required resistance, with a density between 2.4 tons/m3 and 1.2 tons/m³ , with a mechanical resistance in compression on standard EN normed cubes after 28 days > 20 MPa, (ranging from 20 to 60 MPa) and with thermal conductivity located between 2.2 and 0.2 W/m*k.
- A second self placing concrete layer, of thickness between 100 mm and 600 mm, depending on the required thermal insulation value of the whole wall , with a mechanical resistance from 0.1MPa to 10MPa, with a slump flow between 400 mm - 800 mm, with a thermal conductivity between 0.07 W/m*k and 0.2 W/m*k, with a density between 0.3 tons/m³ and 1 ton/m³, and with air content between 30% to 60%, and
- a non-woven fabric located between the first concrete layer and the second concrete layer comprising fibers made of polyamide, polyamide or natural fibers with a phenolic resin as a binder of the lattice, having the non-woven fabric a density between 40 and 200 Kg/m3 and a thickness above 3 mm, more likely between 3mm and 30 mm which remains impermeable to both concretes layers, first and second, so that the core of the non-woven fabric remains free from any of the two concrete layers, preferably, the minimum section of the non-woven fabric free from concrete layers is around 1 mm to 2 mm,
so that the first concrete layer provides structural properties and the second concrete layer provides thermal properties to the wall with an insulation value of the wall located between 0.2 to 0.5 W/m2K

The fabric has an important open connected porosity which allows the anchorage of each concrete layer superficially on both side, although the fabric is selected to be impermeable to each of the concrete layers so that it can act as a separation layer while casting the first concrete.

The fabric ensures that the two concrete layers are not coming in direct contact and assures the mechanical liaison between the two concrete layers and assures relative movement between the two layers by elastic deformation.

Alternatively, the non-woven fabric could be of non-woven geo-textile type.

This structural concrete wall with thermal insulation enables that shear stresses yield by the different thermal expansion of the two concrete layers are accommodated by elastic deformation of the non impregnated core of the non-woven fabric.

The concrete wall system made of the first concrete layer is also reinforced by conventional rebars.

Anchorage of the first concrete layer is enhanced by conventional vibrating the concrete of normal consistency close to the fabric surface, using traditional ultrasonic vibration.

The anchorage of the second concrete layer is enabled by its rheological properties, namely its fluidity and viscosity.

Alternatively, the first concrete layer will have self placing properties with a slump flow between 400 mm - 800 mm and anchorage will issue from the rheological properties of the concrete into the surface of the non-woven fabric.

The second concrete layer has a thermal expansion that is at least 3-5 times lower than the structural concrete (3*10-6 m/m*°C for a thermal conductivity value of 0.15 W/m*K compared to 11*10-6 m/m*°C for a CS concrete with a thermal conductivity of 0.5 W/m*K).

The described concrete wall system is suitable for placing in formwork or molds: since the wall is composed of at least of two concrete layers with different properties in the fresh and hardened state wherein the fabric, located between them, also plays another important role in accommodating the respective thermal expansions of both first and second concrete layers, to avoid that shear cracks appear at the interface between the two concrete layers.

The present invention overcomes the disadvantages of the known prior art, in that:
- The described wall is a sandwich structure with at least two different concrete layers ,
- It does not used intermediate thermal insulation layers,
- The structural properties are provided by a first concrete layer,
- The thermal properties are provided by a second concrete layer,
- In used conventional casting techniques on site, and both concrete layers may be casted separately since there is no need to cast them together as in EP0322923
- The exterior and interior surfaces are rigid concrete
- The level of thermal insulation values obtained for a given thickness are substantially enhanced by comparison with a monolithic light concrete wall

The advantages of the wall system according to the invention are thus easy to understand:
- The wall dimensions is designed based on the mechanical requirements ( composition and thickness of the layer of the first concrete layer), and insulation requirements (composition and thickness of first concrete layer and composition and thickness of the second concrete layer).
- Overall wall thickness can be optimized by minimizing the first concrete layer thickness with regard to the second concrete layer.
- The casting technique is very conventional and can be performed using normal formwork or moulds.
- Both two concrete layers, first and second, do not have to be casted in a synchronized manner, since the two layers are separated by a fabric layer,
- The fabric layer enables mechanical anchorage of the two concrete layers in its surface open porosity, while the core of the fabric remains unfilled by concrete.
- The flexible core of the fabric layer will thus accommodate shear stresses arising from the different thermal expansion properties of both concrete layers, without creating cracks at the interface between the two concrete layers.
- The combination of the structural and thermal concrete layers enables to maintain the wall thickness between 0.3 to 0.7 m while reaching an insulation values between 0.2 to 0.5 W/m2K.

The manufacturing process of the described structural concrete wall with thermal insulation comprises the steps of:
- Placing the non-woven fabric within the space delimited by a first and a second formwork, separating the volume of the complete wall into two sections for respectively the thermal second concrete layer and the structural first concrete layer to be poured,
- Place and attach a metallic or polymer rigid grid or mesh on the whole surface of the non-woven fabric on the side where the second concrete layer of thickness between 100 mm and 600mm will be placed,
- Place at least one conventional metallic or polymer spacer perpendicular to the grid from the Fabric to each formwork to maintain a constant and fixed distance between the Fabric ensuring a controlled dimension of both first and second layer. The length of the spacers are selected to match the desired dimension of the thickness of the first and second layers.
- Pour the first concrete layer between the first framework and the fabric face without the grid,
- Then, pour second concrete layer between the fabric face with the grid and the second formwork.
- Remove first and second formwork once the concrete have reached sufficient resistance, after minimum 1-2 days.

The rigid grid and spacers present the advantages to resist to the hydrostatic pressure of the first concrete layer so the fabric is not deformed by the pressure and the dimensions of the thickness of the first and second concrete layer can be controlled.

According to the invention, the composition of the first concrete layer is always poured before the composition of the second concrete layer.

This device enables to have a controlled value of respectively the thickness of the first layer and the thickness of the second layer within the overall formwork dimensions.

The preparation of the grid, non-woven fabric and spacers are conventional techniques used for instance to prepared formwork for concrete slabs.

### BRIEF DESCRIPTION OF THE DRAWINGS

The description of the different components of the system provided above is complemented with a drawing aimed at facilitating understanding of its structure and operation.
Figure 1 shows a cross sectional view of the wall according to the invention.
Figure 2 shows a cross sectional picture view of the wall according to the invention.
Figure 3 shows a cross sectional picture view of the interface between the second concrete layer after pull out.
Figure 4 show a microscopic picture of the non woven fabric.
Figure 5 shows sketch of the formwork with the fabric separation and the two zones that will be filled up with the two respective concretes and the spacer S, according to the process part of the invention.

In said figures the following references are indicated:
1.- First Concrete Layer
2.- Second Concrete Layer
3.- Non-woven Fabric
4.- Grid
5.- Spacer

### DETAILED DESCRIPTION OF THE INVENTION

### • Structural concrete wall

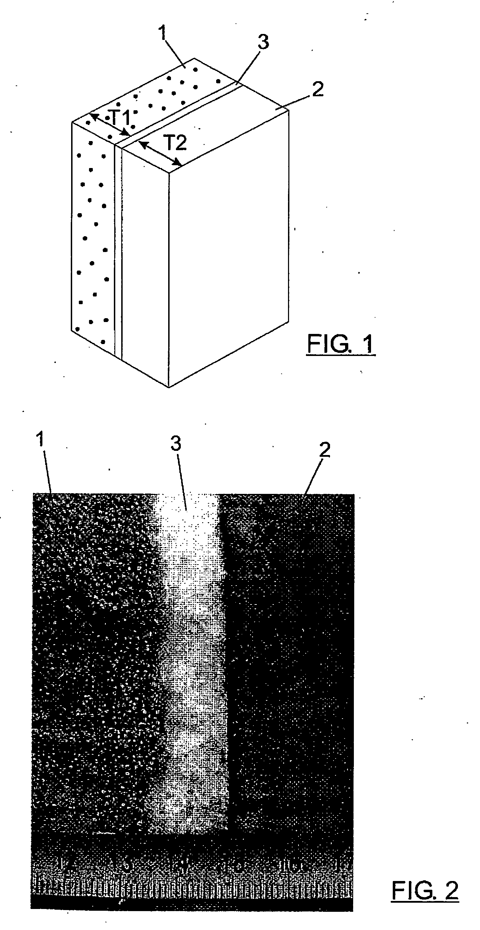

Figure 1 shows a cross sectional view of the wall according to the invention, with a first concrete layer (1) having structural properties and having a thickness T1 , a second foamed concrete (2) with thermal properties and a thickness T2 and a separation textile of non-woven fabric (3) placed between the two concrete layers (1, 2).

According to a first embodiment, the structural wall comprises a first concrete layer (1) and a second concrete layer (2) with a density of around 280 kg/m3, corresponding to the composition of table 1.

Superplastizers of type PCE, polycarboxilate, are added to the concrete mix design to achieve the required self placing properties.

**Table 1**

| **Constituents** | **Composition First Concrete Layer (1) (Kg/m3)** | **Composition Second Concrete layer (2) (Kg/m3)** |
|---|---|---|
| Cement CEM I | 282 | 165 |
| Fly Ash | 239 | 110 |
| Silica fume | 17 | |
| Expanded glass aggregates A 0.1mm/0.7mm | 62 | 67 |
| Expanded glass aggregates 1mm/2mm | 29 | - |
| Expanded clay aggregates 2mm/10mm | 466 | - |
| Expanded glass aggregates B 0.25mm/0.5mm | - | 38 |
| Expanded glass aggregates C 2mm/4mm | - | 58 |
| Water | 185 | 101 |
| PCE | 11.3 | 5.5 |
| Air entrainer | 0 | 1.4 |

In this example, the second concrete layer is using one type of lightweight aggregates with three different ranges of sizes:
- A from 0.1 mm to max 0.7 mm,
- B from 0.25 mm to 0.5 mm,
- C from 2 mm to 4 mm .

Alternatively, the second concrete layer can be designed with two types of aggregates, namely additional expanded clay aggregates of size range 2mm-10 mm, replacing for instance partially the range from 2 mm to 4 mm of the expanded glass lightweight aggregates C.

On the other hand, the first concrete layer is using two types of aggregates expanded glass and expanded clay.

In all cases, the first concrete layer is using simultaneously expanded clay and expanded aggregates whereas the expanded clay represents at least 60% of the total aggregates (in weight).

Table 2 summarizes the properties obtained for the two concretes:

**Table 2**

| **Properties** | **First Concrete layer (1)** | **Second Concrete layer (2)** |
|---|---|---|
| Mechanical resistance (MPa) | 29 | 2 |
| Density | 1289 | 495 |
| Thermal conductivity W/m*k | 0.38 | 0.09 |
| Air content | 7% | 45% |

As a result, the insulation value for a wall according to this embodiment, with a thickness of the first concrete layer of 150 mm and a thickness of the second concrete layer of 200 mm, would be around 0.36 W/m2K.

Increasing the thickness of the second concrete layer to 300 mm enables to achieve an overall insulation value to 0.26 W/m2K.

In a second preferred embodiment, the composition of the first (1) and second (2) concrete layers can be identical, the only difference being that the second concrete layer (2) is a foamed version of the first concrete layer, with an air content of at least 30%.

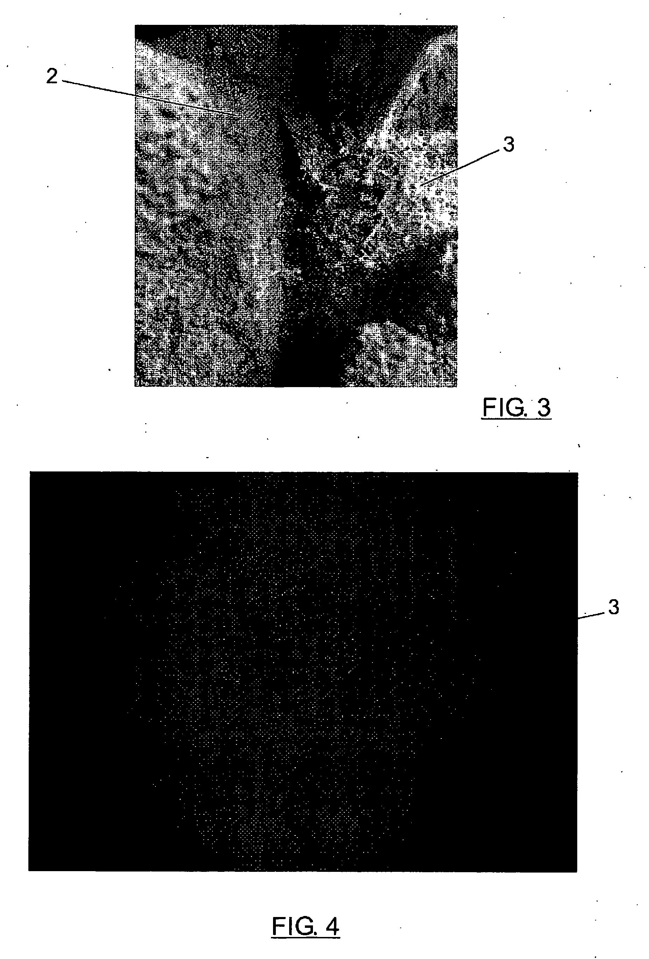

Figure 4 shows a microscopy of the non-woven fabric where the fibers and the gaps between the fibers are clearly visible to enable the anchorage of both concrete layers in the structure.

Figure 2 shows a picture of a cross section of the wall according to the invention. It can be seen that both concrete do adhere to the fabric (3) and that the center of the fabric (3) remains free from concrete.

### • Manufacturing Process

The anchorage of both first (1) and second (2) concrete layers on the surface of the fabric (3) is sufficient to assure that the pull stress of the second concrete layer is higher than 0.07 MPa.

Considering the placing techniques, various alternatives can be envisaged to use conventional casting techniques for job sites.

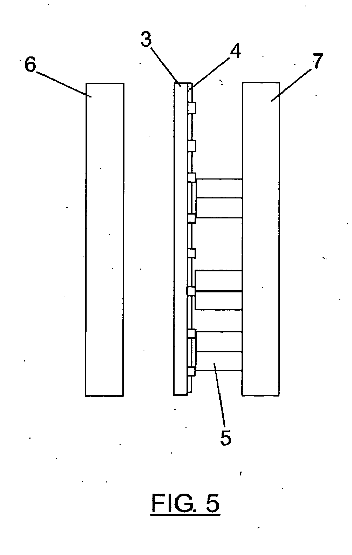

In a first preferred embodiment, as shown on figure 5, the fabric (3) is placed in within the space delimited by the two first (6) and second (7) formwork, separating the volume of the complete wall into two sections for respectively the thermal second concrete layer (2) and the structural first concrete layer (1) to be poured.

A metallic or polymer rigid grid (4) or mesh is placed on the whole surface of the fabric (3) (to which it can be attached), on the side of the second concrete layer (2) of thickness (T2) between 100 mm and 600mm.

Conventional metallic or polymer spacers (5) are placed (attached) perpendicular to the grid and expand to the formwork side to maintain a constant and fixed distance between the grid(4)-Fabric (3) and the formwork delimiting the external surface of the second concrete layer (2), this ensuring a controlled dimension of both first (1) and second layer (2).

The length of the spacers (5) are selected to match the desired dimension of the thickness (T2) of the second layer (2)

In a second embodiment, the manufacturing process of the wall structure comprises the steps of:
- A formwork is erected with a thickness (T1) between 100mm to 200mm,
- then the Fabric (3) is placed on the surface of the formwork,
- after that, the first concrete composition (1) is poured in the formwork,
- Finally, the second concrete composition (2) is poured in the formwork.
- After 1-2 days, the formwork is removed (demoulded).
- A framework is then placed to a distance equal to the thickness of the second concrete layer (2) from the surface covered by the fabric (3) and
- the first concrete layer (1) is casted in the space equal to the thickness of the second concrete layer (2) represented by the distance between the formwork and the fabric (3) anchored on the first concrete layer (1) previously poured.

## Claims

1. Structural concrete wall with thermal insulation comprising:
- A first concrete layer (1) of thickness between 80 mm and 200 mm depending on the required resistance, with a density between 2.4 tons/m3 and 1.2 tons/m³ , with a mechanical resistance in compression on standard EN normed cubes after 28 days > 20 MPa, (ranging from 20 to 60 MPa) and with thermal conductivity located between 2.2 and 0.2 W/m*k
- A second self placing concrete layer (2), of thickness between 100 mm and 600 mm, depending on the required thermal insulation value of the whole wall, with a mechanical resistance from 0.1MPa to 10MPa, with a slump flow between 400 mm - 800 mm, with a thermal conductivity between 0.07 W/m*k and 0.2 W/m*k, with a density between 0.3 tons/m³ and 1 ton/m³, and with air content between 30% to 60%, and
- a non-woven fabric (3) located between the first concrete layer and the second concrete layer comprising fibers made of polyamide or natural fibers with a phenolic resin as a binder of the lattice, having the non-woven fabric a density between 40 and 200 Kg/m3 and a thickness above 3 mm, more likely between 3mm and 30 mm which remains impermeable to both concretes layers, first and second, so that the core of the non-woven fabric remains free from any of the two concrete layers, preferably, the minimum section of the non-woven fabric free from concrete layers is around 1 mm to 2 mm,
so that the first concrete layer provides structural properties and the second concrete layer provides thermal properties giving an insulation value of the wall located between 0.2 to 0.5 W/m2K

2. Manufacturing process of structural concrete wall with thermal insulation of claim 1 **characterized by** comprising the steps of:
- Placing the non-woven fabric (3) within the space delimited by a first and a second formwork, separating the volume of the complete wall into two sections for respectively the thermal second concrete layer (2) and the structural first concrete layer (1) to be poured;
- Placing and attaching a metallic or polymer rigid grid or mesh on the whole surface of the non-woven fabric on the side where the second concrete layer of thickness between 100 mm and 600mm will be placed;
- Placing at least one conventional metallic or polymer spacer perpendicular to the grid from the fabric to each formwork to maintain a constant and fixed distance between the fabric ensuring a controlled dimension of both first and second layer, wherein the length of the spacers are selected to match the desired dimension of the thickness of the first and second layers;
- Pouring the composition of the first concrete layer (1) between the first framework and the fabric face without the grid;
- Then, pouring the composition of the second concrete layer (2) between the fabric face with the grid and the second formwork;
- Removing first and second formwork.

## Patentansprüche

1. Strukturbetonwand mit Wärmedämmung, umfassend:
- eine erste Betonschicht (1) mit einer Dicke zwischen 80 mm und 200 mm, je nach dem erforderlichen Widerstand, mit einer Dichte zwischen 2,4 Tonnen/m3 und 1,2 Tonnen/m³, mit einem mechanischen Widerstand bei Kompression auf nach EN-Standard genormte Würfel nach 28 Tagen > 20 MPa (von 20 bis 60 MPa) und mit thermischer Leitfähigkeit, angesiedelt zwischen 2,2 und 0,2 W/m*k
- eine zweite Selbstplatzierungs-Betonschicht (2) mit einer Dicke zwischen 100 mm und 600 mm, je nach dem erforderlichen Wärmedämmwert der gesamten Wand, mit einem mechanischen Widerstand von 0,1 MPa bis 10 MPa, mit einem Fließmaß zwischen 400 mm - 800 mm, mit einer Wärmeleitfähigkeit von 0,07 W/m*k und 0,2 W/m*k, mit einer Dichte zwischen 0,3 Tonnen/m³ und 1 Tonne/m³ und mit Luftgehalt zwischen 30% bis 60%, und
- einen Vliesstoff (3), angeordnet zwischen der ersten Betonschicht und der zweiten Betonschicht, umfassend Fasern aus Polyamid oder Naturfasern mit einem Phenolharz als Bindemittel des Gitters, der Vliesstoff eine Dichte zwischen 40 und 200 kg/m3 und eine Dicke von über 3 mm, häufiger zwischen 3 mm und 30 mm habend, der für beide Betonschichten, die erste und die zweite, undurchlässig bleibt, so dass der Kern des Vliesstoffes von jeder der beiden Betonschichten frei bleibt, vorzugsweise ist der minimale Abschnitt des von Betonschichten freien Vliesstoffes etwa 1 mm bis 2 mm,
so dass die erste Betonschicht strukturelle Eigenschaften bereitstellt und die zweite Betonschicht thermische Eigenschaften bereitstellt, wobei ein Isolierungswert der Wand, angesiedelt zwischen 0,2 bis 0,5 W/m2K, gegeben ist.

2. Herstellungsverfahren einer Strukturbetonwand mit Wäimedämmung nach Anspruch 1, **gekennzeichnet dadurch, dass** es folgende Schritte umfasst:
- Platzieren des Vliesstoffes (3) in dem von einer ersten und einer zweiten Schalung begrenzten Raum, Trennen des Volumens der gesamten Wand in zwei Abschnitte, damit jeweils die thermische zweite Betonschicht (2) und die strukturelle erste Betonschicht (1) gegossen werden;
- Platzieren und Befestigen eines metallischen oder Polymer-starren Gitters oder Siebs auf der gesamten Oberfläche des Vliesstoffes, auf der Seite, wo die zweite Betonschicht mit einer Dicke zwischen 100 mm und 600 mm platziert werden wird;
- Platzieren mindestens eines herkömmlichen metallischen oder Polymer-Abstandshalters senkrecht zum Gitter, vom Vlies zu jeder Schalung, um einen konstanten und festen Abstand zwischen dem Vlies aufrechtzuerhalten, eine kontrollierte Dimension beider, der ersten und zweiten Schicht gewährleistend, wobei die Längen der Abstandshalter so ausgewählt sind, um der gewünschten Dimension der Dicke der ersten und zweiten Schichten zu entsprechen;
- Gießen der Zusammensetzung der ersten Betonschicht (1) zwischen dem ersten Rahmen und der Vliesoberfläche ohne das Gitter;
- dann, Gießen der Zusammensetzung der zweiten Betonschicht (2) zwischen der Vliesoberfläche mit dem Gitter und der zweiten Schalung;
- Entfernen der erster und zweiten Schalung.

## Revendications

1. Mur en béton structurel avec isolation thermique comprenant :
- Une première couche en béton (1) d'une épaisseur entre 80 mm et 200 mm en fonction de la résistance requise, avec une densité entre 2,4 tonne/m³ et 1,2 tonne/m³, avec une résistance mécanique en compression sur des cubes normalisés selon la norme EN après 28 jours > 20 MPa (comprise entre 20 et 60 MPa) et avec conductivité thermique située entre 2,2 et 0,2 W/m*k
- Une deuxième couche en béton autoplaçant (2), d'une épaisseur entre 100 mm et 600 mm, en fonction de la valeur d'isolation thermique requise de l'ensemble du mur, avec une résistance mécanique de 0,1 MPa à 10 MPa, avec un flux d'affaissement entre 400 mm - 800 mm, avec une conductivité thermique entre 0,07 W/m*k et 0,2 W/m*k, avec une densité entre 0,3 tonne/m³ et 1 tonne/m³, et avec une teneur en air entre 30 % et 60 %, et
- un tissu non-tissé (3) situé entre la première couche en béton et la deuxième couche en béton comprenant des fibres faites en polyamide ou en fibres naturelles avec une résine phénolique comme un liant du treillis, le tissu non-tissé ayant une densité entre 40 et 200 kg/m³ et une épaisseur au-dessus de 3 mm, plus probablement entre 3 mm et 30 mm qui reste imperméable aux deux couches en béton, la première et la deuxième, de sorte que le coeur du tissu non-tissé reste exempt de l'une quelconque des deux couches de béton, de préférence, la section minimale du tissu non-tissé exempt de couches en béton est approximativement de 1 mm à 2 mm,
de sorte que la première couche en béton confère des propriétés structurelles et la deuxième couche en béton confère des propriétés thermiques donnant une valeur d'isolation du mur située entre 0,2 à 0,5 W/m2K.

2. Procédé de fabrication de mur en béton structurel avec isolation thermique selon la revendication 1 **caractérisé en ce qu'**il comprend les étapes de :
- Placer le tissu non tissé (3) dans l'espace délimité par un premier et un deuxième coffrage, séparant le volume du mur complet en deux sections pour verser respectivement la deuxième couche en béton thermique (2) et la première couche en béton structurelle (1) ;
- Placer et fixer une grille ou une maille rigide métallique ou en polymère sur toute la surface du tissu non tissé sur le côté où la deuxième couche en béton d'une épaisseur entre 100 mm et 600 mm sera placée ;
- Placer au moins un écarteur conventionnel métallique ou en polymère perpendiculaire à la grille depuis le tissu à chaque coffrage pour maintenir une distance constante et fixe entre le tissu assurant une dimension contrôlée aussi bien de la première que de la deuxième couche, dans lequel la longueur des écarteurs est choisie pour s'ajuster à la dimension désirée de l'épaisseur de la première et la deuxième couche ;
- Verser la composition de la première couche en béton (1) entre le premier coffrage et la face de tissu sans la grille ;
- Puis, verser la composition de la deuxième couche en béton (2) entre la face de tissu avec la grille et le deuxième coffrage ;
- Retirer le premier et le deuxième coffrage.
